(19) Europäisches Patentamt
European Patent Office
Office européen des brevets

(11) Veröffentlichungsnummer: **0 258 486 B1**

(12) **EUROPÄISCHE PATENTSCHRIFT**

(45) Veröffentlichungstag der Patentschrift:
30.05.90

(21) Anmeldenummer: **86112298.4**

(22) Anmeldetag: **05.09.86**

(51) Int. Cl.⁵: **A23L 1/29**, A23L 1/30,
A23L 1/307, A23L 1/105,
A23L 1/05, A23L 1/212

(54) Diätetische stärkehaltige Zubereitung.

(43) Veröffentlichungstag der Anmeldung:
**09.03.88 Patentblatt 88/10**

(45) Bekanntmachung des Hinweises auf die Patenterteilung:
**30.05.90 Patentblatt 90/22**

(84) Benannte Vertragsstaaten:
**AT BE CH DE FR GB IT LI LU NL SE**

(56) Entgegenhaltungen:
**EP-A- 0 031 050**
**DD-A- 39 204**
**DE-A- 2 759 046**
**DE-A- 3 401 682**

(73) Patentinhaber: **SOCIETE DES PRODUITS NESTLE S.A.,
Case postale 353, CH-1800 Vevey(CH)**

(72) Erfinder: **Reinl, Hubert, Nelkenweg 7,
D-8261 Tüssling(DE)**
Erfinder: **Schmidt, Elke, Aussigerstrasse 25G,
D-8264 Waldkraiburg(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft eine diätetische stärkehaltige Zubereitung, sowie die Verwendung von enzymatisch-hydrolysierten Cerealien für die Herstellung dieser Zubereitung.

Der Erfindung liegt die Aufgabe zugrunde, eine Zubereitung mit einem hohen Gehalt an Cerealien für Kleinkinder anzubieten. Die normalen Getreidezubereitungen mit Früchten können nicht mehr als 4% Cerealien enthalten, sonst sind sie zu fest in ihrer Konsistenz. Es besteht das Bedürfnis, für Kinder Zubereitungen mit höherem Cerealiengehalt herzustellen, denn je höher dieser Gehalt ist, desto länger dauert das Sättigungsgefühl. EP-A 0 031 050 betrifft ein Verfahren zur Herstellung eines pulverförmigen Nahrungsmittels, indem ein stärkehaltiges Material mit Alphaamylase und Betaamylase behandelt wird. Mit dieser Enzymmischung erreicht man einen DE-Wert (Dextrose-Equivalent) unterhalb 40, so dass eine Zuckerzugabe notwendig ist. Die vorliegende Erfindung bietet eine solche Zubereitung mit ganz leicht bemerkbaren Getreideanteilen, bzw. Schalenbestandteilen und die löffelfest und cremig ist und worin es sich erübrigt, Zucker zuzufügen.

Die Erfindung betrifft eine diätetische stärkehaltige Zubereitung, die mehr als 50% Früchte oder Gemüse, mindestens 10% Cerealien auf TS, hergestellt dadurch, dass man ein erstes Gemisch aus stärkehaltigem Material und Wasser herstellt, dieses Gemisch kocht und durch enzymatische Hydrolyse mittels einer α-Amylase/Amyloglucosidasemischung verflüssigt, dass man ein zweites Gemisch aus stärkehaltigem Material, Wasser und wenigstens einem Teil des ersten verflüssigten Gemisches herstellt, und zwar auf solche Art und Weise, dass das zweite Gemisch einen Gehalt an Trockenstoffen von 35 bis 40 Gew.-% aufweist, dass man das zweite Gemisch kocht, dasselbe durch enzymatische Hydrolyse mit derselben Enzymmischung verflüssigt, 22 bis 24% Kohlenhydrate, zwischen 2 und 4% Fett, zwischen 1 und 3% Protein, Wasser und gegebenenfalls Hafermehl um eine Menge zwischen 2,5 bis 3,5%, bezogen auf die Gesamtmischung, enthält.

Aus ernährungsphysiologischer Sicht ist ein Vollkornanteil von 10–13% (bezogen auf die Trockensubstanz) und ein Fettanteil von 2 bis 4% als ausgewogen zu bezeichnen. Die Zubereitung wird ohne Bindemittel- und Zucker-Zusatz hergestellt.

Die Frucht-, bzw. Gemüse-Komponente, soll geschmacklich überwiegen und der Getreideanteil soll im Hintergrund schmeckbar sein; eine obere Grenze von Cerealien von 13% ist deswegen vernünftig.

Die Forderung nach einem solchen Cerealienanteil (bezogen auf die Trockensubstanz TS) und die Aussage «ohne Zuckerzusatz» lassen sich nur durch den Einsatz von enzymatisch aufbereitetem Getreide realisieren. Diese enzymatisch hydrolysierten Cerealien (ECH) sind gemäss Verfahren von EP-A 31 050 mittels einer Alphaamylase/Amyloglucosidasemischung hergestellt. Der Cerealienanteil besteht aus 2,5 bis 3,5% Hafermehl und 20 bis 25% enzymatisch hydrolysierten Cerealien in flüssiger Phase. Das Hafermehl dient zur Bindung der Zubereitung.

Diese Zubereitung ist besonders geeignet für Kleinkinder ab 6. Lebensmonat. Als Cerealien versteht man in der vorliegenden Erfindung ein stärkehaltiges Material, wie ein Mehl oder eine Getreidestärke oder eine Stärke aus einer Mischung von Getreidearten, insbesondere von Weizen, Gerste, Hafer, Roggen, Reis und/oder Mais, das wie weiter unten dargelegt behandelt worden ist. Als Früchte versteht man Ananas, Aepfel, Orangen, Bananen, Kirschen und weitere und als Gemüse Erbsen, Spinat, Karotten, Sellerie, Tomaten und andere.

Die Erfindung betrifft weiter die Verwendung von enzymatisch hydrolysierten Cerealien zur Herstellung der obenerwähnten Zubereitung, indem man zwischen 20 und 25% ECH in flüssiger Phase mit einem Trockensubstanzgehalt von 35 bis 40% mit mehr als 50% Früchten oder Gemüse, zwischen 2,5 und 3,5% Hafermehl und Wasser bei einem säueren pH zusammenmischt.

Für die Früchte geschieht die Mischung bei einem pH von ungefähr 4 und für die Gemüse bei einem pH zwischen 5 und 6.

Das Prinzip der Herstellung der ECH basiert auf einer Mischung von Mehl mit Wasser und dem Zusatz von α-Amylase und Amyloglucosidase bei Bedingungen, die in EP-A 31 050 gegeben sind. Man bekommt dann eine Mehl-Wasser Mischung mit einem Dextrose-Equivalent (DE) zwischen 50 und 55. Die Enzymreaktion bewirkt eine Verflüssigung (α-Amylase) und Verzuckerung (Amyloglucosidase) des Mehlbreies.

Ein ECH-Anteil von über 25% macht sich sensorisch durch ein Ueberwiegen der Getreidekomponente bemerkbar. Das ECH trägt nicht zur Bindung bei und hat hinsichtlich dieses Aspektes keine Mengenbeschränkung nach oben. Bei der vorgestellten Produktgruppe wird ECH in flüssiger Form mit einem TS von ungefähr 38% eingesetzt.

Die Herstellungsvorschrift ist die folgende: man passiert die Früchte oder Gemüse in einer Passiermaschine mit Sieb. In einem Mischer fügt man die übrigen Zutaten (ECH, Mehl, Wasser, Oel) zu. Auf einem Plattenwärmetauscher erhitzt man auf ca. 90°C. Dann folgt eine Entgasung und eine Nacherhitzung bei ca. 98°C. Das Produkt ist hierauf bereit zur Abfüllung: diese geschieht bei ca. 90°C und schliesslich führt man die Pasteurisierung durch.

Aus Kenntnis des nächstkommenden Standes der Technik, nämlich EP-A 0 031 050 konnte nicht vorhergesehen werden, dass bei dem anspruchsgemäss vorgesehenen hohen Anteil an den Cerealien eine löffelfeste und cremige Masse entsteht.

Die nachfolgenden Beispiele werden zur Veranschaulichung der vorliegenden Erfindung gegeben. Die darin angegebenen Prozentsätze sowie diejenige der Ansprüche beziehen sich auf das Gewicht.

Beispiel 1: Herstellung der ECH

Man mischt 41,209 kg Hafermehl mit mit 62 kg Wasser, 1,236 kg Amyloglucosidase (3%) und 0,054 kg Amylase B 100 (0, 13%) und arbeitet bei den gleichen Bedingungen wie im Beispiel 1 des EP-Patents 31 050. Aber anstatt zu trocknen, verwendet man die Zubereitung in flüssiger Phase mit einem DE-Wert von 50–55 und einem TS von ca. 38%.

Beispiel 2:

Die folgenden Tabellen 1 bis 4 geben Beispiele für Früchtezubereitungen.

| Tabelle 1 | |
|---|---|
| Äpfel | 40% |
| Sauerkirschen entsteint | 15% |
| Öl | 2% |
| ECH-Hafer, DE=50–55 | 21% |
| Hafermehl | 3,5% |
| Wasser | 10,4% |
| Übrige Zutaten (Saftkonzentrat) | 8,1% |

| Tabelle 2 | |
|---|---|
| Ananasraspel | 21% |
| Äpfel | 40% |
| Sahne | 6,7% |
| ECH-Hafer DE=50 | 21% |
| Hafermehl | 3% |
| Wasser | 2% |
| Übrige Zutaten (Saftkonzentrat) | 6,3% |

| Tabelle 3 | |
|---|---|
| Äpfel | 45% |
| Orangen | 6% |
| Sahne | 3,3% |
| Öl | 1% |
| ECH-Hafer DE=50–55 | 21% |
| Hafermehl | 2,5% |
| Wasser | 6,5% |
| Übrige Zutaten (Saftkonzentrat) | 14,7% |

| Tabelle 4 | |
|---|---|
| Äpfel | 40% |
| Bananen | 20% |
| Öl | 2% |
| ECH-Hafer DE=50–55 | 20% |
| Hafermehl | 3% |
| Wasser | 10,5% |
| Übrige Zutaten (Saftkonzentrat) | 4,5% |

Beispiel 3

Die folgende Tabelle gibt die Nährwerte der vier oben gegebenen Zubereitungen:

Tabelle 5

|  | Fett % | Protein % | Kohlenhydrate % | KJoule pro 100 G |
|---|---|---|---|---|
| Sauerkirschen und Äpfel | 3,1 | 2,0 | 22,6 | 536 |
| Ananas und Äpfel | 3,0 | 1,9 | 23,9 | 552 |
| Orangen und Äpfel | 2,9 | 1,9 | 23,4 | 540 |
| Bananen und Äpfel | 3,0 | 2,0 | 22,7 | 533 |

**Patentansprüche**

1. Diätetische stärkehaltige Zubereitung dadurch gekennzeichnet, dass sie mehr als 50% Früchte oder Gemüse, mindestens 10% Cerealien bezogen auf TS, hergestellt dadurch, dass man ein erstes Gemisch aus stärkehaltigem Material und Wasser herstellt, dieses Gemisch kocht und durch enzymatische Hydrolyse mittels einer $\alpha$-Amylase/Amyloglucosidasemischung verflüssigt, dass man ein zweites Gemisch aus stärkehaltigem Material, Wasser und wenigstens einem Teil des ersten verflüssigten Gemisches herstellt, und zwar auf solche Art und Weise, dass das zweite Gemisch einen Gehalt an Trockenstoffen von 35 bis 40 Gew.-% aufweist, dass man das zweite Gemisch kocht, dasselbe durch enzymatische Hydrolyse mit derselben Enzymmischung verflüssigt, 22 bis 24% Kohlenhydrate, zwischen 2 und 4% Fett, zwischen 1 und 3% Protein, Wasser und gegebenenfalls Hafermehl in einer Menge zwischen 2,5 bis 3,5%, bezogen auf die Gesamtmischung, enthält.

2. Diätetische stärkehaltige Zubereitung gemäss Anspruch 1, dadurch gekennzeichnet, dass sie zwischen 10 und 13% Cerealien bezogen auf TS enthält.

3. Diätetische stärkehaltige Zubereitung gemäss Ansprüchen 1 und 2, dadurch gekennzeichnet, dass der Cerealienanteil aus 2,5 bis 3,5% Hafermehl und zwischen 20 und 25% enzymatisch hydrolysierten Cerealien mit einem Trockengehalt von 35 bis 40% besteht.

4. Verwendung der enzymatisch hydrolysierten Cerealien gemäss Anspruch 1 zur Herstellung der stärkehaltigen Zubereitung gemäss Ansprüchen 1 bis 3, dadurch gekennzeichnet, dass man zwischen 20 und 25% ECH in flüssiger Phase mit einem Trockensubstanzgehalt von 35 bis 40% mit mehr als 50% Früchte oder Gemüse, zwischen 2,5 und 3,5% Hafermehl und Wasser bei einem sauren pH zusammenmischt.

5. Verwendung gemäss Anspruch 4, dadurch gekennzeichnet, dass für Früchte die Mischung bei einem pH von ungefähr 4 stattfindet.

6. Verwendung gemäss Anspruch 4, dadurch gekennzeichnet, dass für Gemüse die Mischung bei einem pH zwischen 5 und 6 stattfindet.

7. Verwendung gemäss Ansprüchen 4 bis 6, dadurch gekennzeichnet, dass man danach die Mischung erhitzt, entgast, nacherhitzt, in Gläser abfüllt und pasteurisiert.

**Revendications**

1. Préparation diététique contenant de l'amidon, caractérisée en ce qu'elle renferme plus de 50% de fruits ou de légumes, au moins 10% de céréales par rapport à la substance sèche, préparées en formant un premier mélange de matière amylacée et d'eau, en faisant bouillir ce mélange et en le liquéfiant par hydrolyse enzymatique au moyen d'un mélange $\alpha$-amylase/amyloglucosidase, en formant un second mélange de matière amylacée et d'eau et d'au moins une partie du premier mélange liquéfié, à savoir de façon telle que le second mélange présente une teneur en substance sèche de 35 à 40% en poids, en faisant bouillir le second mélange, en le liquéfiant par hydrolyse enzymatique avec le même mélange d'enzymes, 22 à 24% de glucides, entre 2 et 4% de matière grasse, entre 1 et 3% de protéine, de l'eau et, le cas échéant, de la farine d'avoine en une quantité comprise entre 2,5 et 3,5% par rapport au mélange total.

2. Préparation diététique contenant de l'amidon suivant la revendication 1, caractérisée en ce qu'elle renferme entre 10 et 13% de céréales sur la base de la substance sèche.

3. Préparation diététique contenant de l'amidon suivant les revendications 1 et 2, caractérisée en ce que la fraction de céréales se compose de 2,5 à 3,5% de farine d'avoine et de 20 à 25% de céréales hydrolysées par voie enzymatique, avec une teneur en matière sèche de 35 à 40%.

4. Utilisation des céréales hydrolysées par voie enzymatique suivant la revendication 1, pour l'obtention de la préparation contenant de l'amidon suivant les revendications 1 à 3, caractérisée en ce qu'on mélange ensemble 20 à 25% de CHE en phase liquide, ayant une teneur en substance sèche de 35 à

4

40%, avec plus de 50% de fruits ou de légumes, entre 2,5 et 3,5% de farine d'avoine et de l'eau, à un pH acide.

5. Utilisation suivant la revendication 4, caractérisée en ce que pour des fruits, on effectue le mélange à un pH d'environ 4.

6. Utilisation suivant la revendication 4, caractérisée en ce que pour des légumes, on effectue le mélange à un pH compris entre 5 et 6.

7. Utilisation suivant les revendications 4 à 6, caractérisée en ce que l'opération de mélange est suivie d'un chauffage, d'un dégazage, d'un post-chauffage, d'un conditionnement dans des récipients en verre et d'une pasteurisation.

**Claims**

1. A dietetic starch containing preparation characterized in that it contains more than 50% fruits or vegetables, at least 10% cereals based on dry matter, prepared by forming a first mixture of amylaceous material and water, cooking the mixture and liquefying it by enzymatic hydrolysis with a mixture of α-amylase/amyloglucosidase, forming a second mixture of amylaceous material, water and at least part of the first liquefied mixture, so that the second mixture has a dry matter content of from 35 to 40% by weight, cooking the second mixture, liquefying it by enzymatic hydrolysis with the same enzyme mixture, 22 to 24% carbohydrates, between 2 and 4% fats, between 1 and 3% protein and water and if necessary oatmeal in a quantity comprised between 2,5 and 3,5% based on the total mixture.

2. A dietetic starch-containing preparation as claimed in claim 1, characterized in that it contains between 10 and 13% cereals, based on dry matter.

3. A dietetic starch-containing preparation as claimed in claims 1 and 2, characterized in that the cereal component consists of 2,5 to 3,5% oatmeal and 20 to 25% enzymatically hydrolyzed cereals, with a dry matter content between 35 and 40%.

4. The use of enzymatically hydrolyzed cereals according to claim 1, to produce the starch containing preparation according to claims 1 to 3 characterized in that between 20 and 25% ECH in liquid form with a dry matter content of 35 to 40%, more than 50% fruits or vegetables, between 2,5 and 3,5% oatmeal and water are mixed together at an acidic pH value.

5. The use claimed in claim 4, characterized in that, for fruits, mixing is carried out at a pH value of approximately 4.

6. The use claimed in claim 4, characterized in that, for vegetables, mixing is carried out at a pH value of from 5 to 6.

7. The use claimed in claims 4 to 6, characterized in that the mixture is then heated, degassed, reheated in glass bottles and pasteurized.